# EUROPEAN PATENT SPECIFICATION

(11) **EP 0 305 030 B1**
(45) Date of publication and mention of the grant of the patent: **13.04.1994**
(21) Application number: 88305346.4
(22) Date of filing: 10.06.1988
(51) Int. Cl.: G02F 1/133, H01L 21/84, H01L 29/78

(54) **Liquid crystal display element**
Flüssigkristall-Anzeigeelement
Elément d'affichage à cristaux liquides

(30) Priority: 26.08.1987 JP 212304/87
(43) Date of publication of application: 01.03.1989
(73) Proprietor: SHARP KABUSHIKI KAISHA, Osaka 545 (JP)
(72) Inventor: Sakono, Ikuo, Osaka-shi Osaka-fu (JP); Inui, Motokazu, Kawachinagano-shi Osaka-fu (JP); Kato, Hiroaki, Nara-shi Nara-ken (JP)
(74) Representative: Brown, Kenneth Richard

(56) References cited:
- EP-A- 0 125 666
- EP-A- 0 196 915
- EP-A- 0 209 113
- EP-A- 0 211 402

## Description

The present invention relates to a liquid crystal matrix display device employing thin film transistors (hereinafter abbreviated to "TFTs") as address elements.

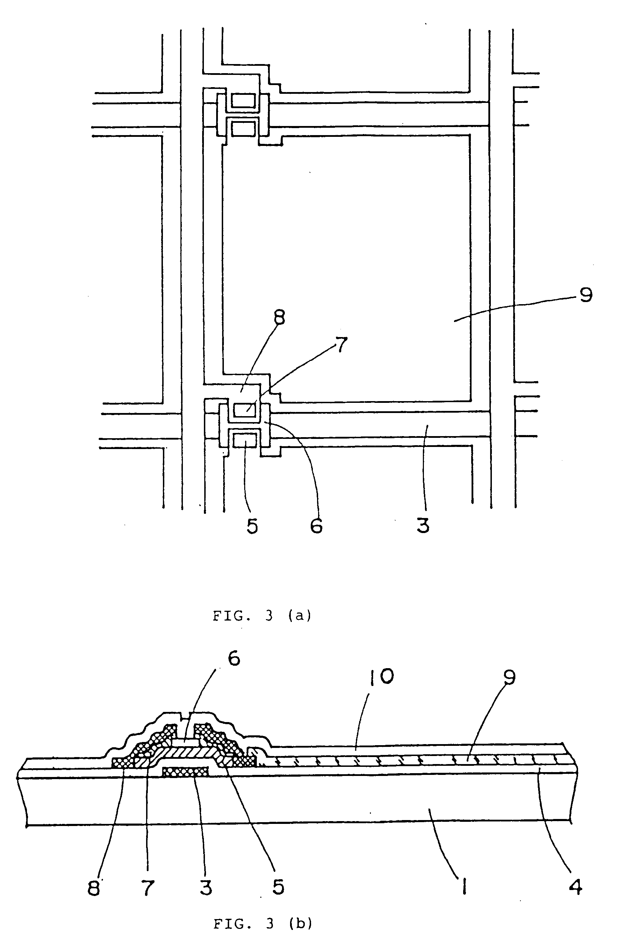

Figs. 3(a) and 3(b) illustrate the construction of an exemplary liquid crystal matrix display device employing reverse stagger TFTs as address elements. This liquid crystal display comprises a gate electrode 3, a gate insulating film 4, an amorphous silicon (hereinafter referred to as "a-Si") film 5, an insulation film 6, an n⁺-type a-Si film 7, source and drain electrodes 8, a picture element electrode 9 for display and a protective film 10 formed one over another on an insulating substrate 1. The insulating substrate 1 is a glass plate, and the gate electrodes 3 are formed of tantalum (Ta). When the gate electrodes 3 are formed by a wet etching process using a tantalum etching solution, the glass insulating substrate 1 is eroded by the etching solution and thereby the surface of the glass insulating substrate 1 becomes cloudy and rough. Although, as shown in Figure 4, it is known to provide an insulating layer on the substrate, no structure for completely solving such a problem has been known.

GB-A-2,050,031 describes liquid crystal display devices and methods for their construction. The devices disclosed include an etch protectant layer between a substrate, row conductors and transparent display electrodes carried on that substrate. The column conductors are formed on the opposed substrate.

EP-A-0,209,113 describes liquid crystal display devices with data lines fabricated in a multilayer structure to permit the upper conductor to cross the gate lines without step jumps and to provide redundancy in the data line elsewhere.

Accordingly, it is an object of the present invention to provide a structure capable of obviating the direct wetting of the surface of the glass insulating substrate of a liquid crystal display device in the course of its manufacture.

It is another object of the present invention to provide a liquid crystal matrix display device employing reverse stagger TFTs as address elements, and having less possibility of breaking of connecting lines.

According to the present invention there is provided a liquid crystal display device including an insulating substrate on which are formed:
a plurality of row and column electrodes;
a plurality of thin film transistors at intersections of the row and column electrodes and each connected to the row electrode and the column electrode which cross at the respective intersection;
a plurality of picture element electrodes each being connected to a respective said thin film transistor so as to be addressable thereby; and
thin metallic film portions formed in the same plane as that of the row electrodes, said thin metallic film portions extending along and under the column electrodes between the row electrodes;
characterised by:
an insulating film formed on the insulating substrate, said row and column electrodes, said thin film transistors, said picture element electrodes and said thin metallic film portions being formed on the insulating film; and
said thin metallic film portions having a width which is greater than that of the column electrodes.

The thin metallic film portions smoothen the column electrodes to help prevent the breaking of the column electrodes. Additionally, the thin metallic film portions protect the insulating substrate from the erosive action of etching solution; hence, the possibility of the column electrodes breaking is further reduced.

A preferred embodiment of the invention will now be described by way of example, with reference to Figures 1, and 2a to 2c of the accompanying drawings, in which:
Figure 1 is a plan view of a liquid crystal display device in a preferred embodiment, according to the present invention;
Figure 2(a) is a sectional view taken on line IIA-IIA in Fig. 1;
Figure 2(b) is a sectional view taken on line IIB-IIB in Fig. 1;
Figure 2(c) is a sectional view taken on line IIC-IIC in Fig. 1;
Figure 3(a) is a plan view of an exemplary conventional liquid crystal display element;
Figure 3(b) is a sectional view of the conventional liquid crystal display element of Fig. 3(a); and
Figure 4 is a sectional view of another conventional liquid crystal display element.

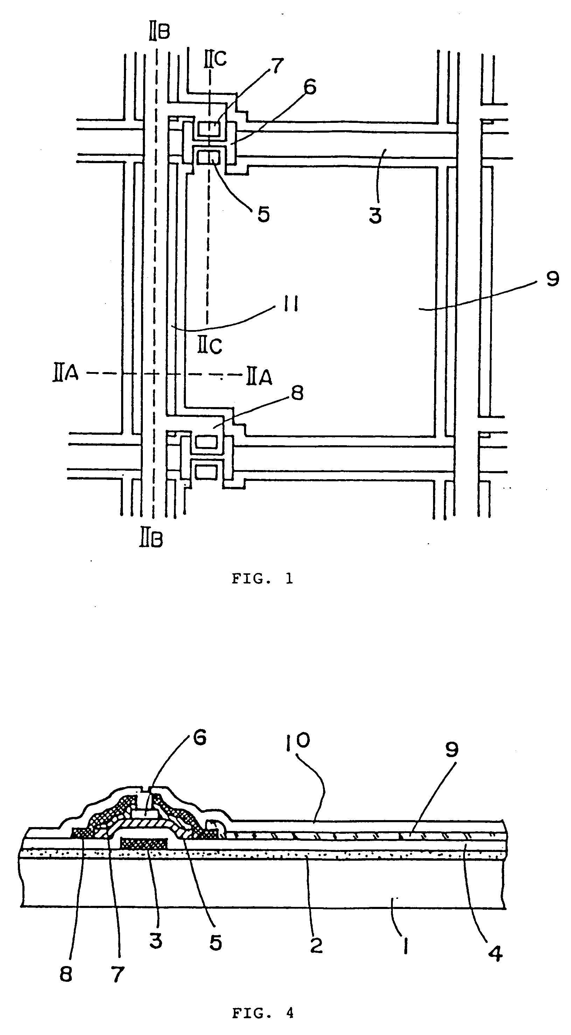

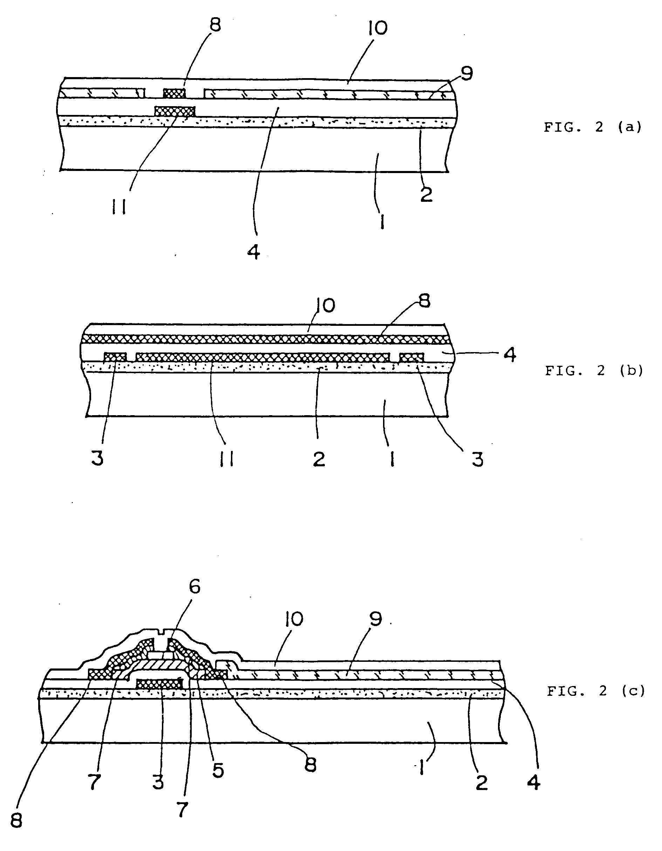

To make the liquid crystal display device of Figs. 1, 2(a), 2(b) and 2(c), tantalum pentaoxide (Ta₂O₅) is first deposited by sputtering over the surface of an insulating substrate 1 formed of glass to form an insulating film 2 of approximately 3000Å thickness over the surface of the insulating substrate 1. Then, a tantalum film of approximately 3000Å thickness is formed over the insulating film 2 by sputtering. The tantalum film is patterned by photoetching to form gate electrodes 3 and a metallic thin film 11 in the same plane. Then, an insulating film 4 of SiNx having a thickness of approximately 4000Å is formed over the gate electrodes 3 and the metallic thin film 11 through a plasma chemical vapour deposition process (hereinafter referred to as "plasma CVD process"). Subsequently, a semiconductor film, e.g. an a-Si film, of approximately 300Å thickness and an insulating film, e.g. a SiNx film, of approximately 2000Å thickness are formed in that order. The semiconductor film and the insulating film are subjected to photoetching to form a patterned semiconductor film 5 and a patterned insulating film 6. Then, a semiconductor film, e.g. an n⁺-type a-Si film, is formed to a thickness of approximately 400Å through a plasma CVD process, and then the semiconductor film is subjected to photoetching to form a patterned semiconductor film 7. Then, Ti, Mo or W is deposited in a film having a thickness of approximately 3000Å through sputtering or electron beam evaporation, and then the film is subjected to photoetching to form source and drain electrodes 8. Then, a transparent conductive film having a thickness of approximately 1000Å and containing indium oxide as a principal component is formed through sputtering or electron beam evaporation, then the transparent conductive film is subjected to photoetching to form picture element electrodes 9. Then, a protective film 10, i.e. a SiNx film, of approximately 5000Å in thickness is formed through a plasma CVD process. Thus obtained is a matrix liquid crystal display device comprising the gate electrodes 3 and a thin metallic film 11 formed of the same material as that of the gate electrodes 3 formed in the same plane under the source path lines.

The thin metallic film 11 protects the insulating substrate 1 from the erosive action of the etching solutions, and hence the possibility of breaking of the source path lines is reduced.

As apparent from the foregoing description, the matrix liquid crystal display element has the thin metallic film formed of the same material as that of the gate electrodes and formed under the source path lines in a plane containing the gate electrodes. Accordingly, the insulating substrate is protected from the erosive action of the etching solutions by the thin metallic film, so that the possibility of breaking of the lines is reduced.

Although the present invention has been described in its preferred form with a certain degree of particularity, it will be apparent to those skilled in the art that various changes and modifications may be made therein without departing from the scope of the present invention as claimed.

## Claims

1. A liquid crystal display device including an insulating substrate (1) on which are formed:
a plurality of row and column electrodes (3, 8);
a plurality of thin film transistors at intersections of the row and column electrodes and each connected to the row electrode and the column electrode which cross at the respective intersection;
a plurality of picture element electrodes (9) each being connected to a respective said thin film transistor so as to be addressable thereby; and
thin metallic film portions (11) formed in the same plane as that of the row electrodes (3), said thin metallic film portions (11) extending along and under the column electrodes (8) between the row electrodes (3);
characterised by:
an insulating film (2) formed on the insulating substrate (1), said row and column electrodes, said thin film transistors, said picture element electrodes and said thin metallic film portions being formed on the insulating film (2); and
said thin metallic film portions (11) having a width which is greater than that of the column electrodes (8).

2. A liquid crystal display device as claimed in claim 1, wherein the row electrodes (3) and the thin metallic film portions (11) are made of the same material and have the same thickness.

3. A liquid crystal display device as claimed in claim 2, wherein the row electrodes (3) and the thin metallic film portions (11) are made of tantalum.

4. A liquid crystal display device as claimed in claim 1, wherein the insulating film (2) is made of tantalum pentaoxide.

5. A liquid crystal display device as claimed in claim 1, further comprising an insulating film (4) covering entirely said row electrodes (3) and said thin metallic film portions (11), said column electrodes (8) being formed over this insulating film (4).

## Patentansprüche

1. Flüssigkristall-Anzeigevorrichtung mit einem isolierenden Substrat (1), auf welchem ausgebildet sind:
Eine Mehrzahl von Zeilen- und Spaltenelektroden (3, 8),
eine Mehrzahl von an Kreuzungen der Zeilen- und Spaltenelektroden angeordneten Dünnschicht-Transistoren, deren jeder an diejenige Zeilenelektrode und Spaltenelektrode angeschlossen ist, die sich bei der entsprechenden Kreuzung kreuzen,
eine Mehrzahl von Bildelement-Elektroden (9), deren jede an einen entsprechenden Dünnschicht-Transistor angeschlossen und durch diesen adressierbar ist, sowie
dünne Metallschichtabschnitte (11), die sich in derselben Ebene wie die Zeilenelektroden (3) befinden und sich entlang und unter den Spaltenelektroden (8) zwischen den Zeilenelektroden (3) erstrecken,
**dadurch gekennzeichnet,**
daß auf dem isolierenden Substrat (1) eine isolierende Schicht (2) ausgebildet ist, wobei die Zeilen- und Spaltenelektroden, die Dünnschicht-Transistoren, die Bildelement-Elektroden und die dünnen Metallschichtabschnitte auf der isolierenden Schicht (2) ausgebildet sind,
und daß die dünnen Metallschichtabschnitte (11) breiter als die Spaltenelektroden (8) sind.

2. Flüssigkristall-Anzeigevorrichtung nach Anspruch 1, wobei die Zeilenelektroden (3) und die dünnen Metallschichtabschnitte (11) aus demselben Material bestehen und dieselbe Dicke haben.

3. Flüssigkristall-Anzeigevorrichtung nach Anspruch 2, wobei die Zeilenelektroden (3) und die dünnen Metallschichtabschnitte (11) aus Tantal bestehen.

4. Flüssigkristall-Anzeigevorrichtung nach Anspruch 1, wobei die isolierende Schicht (2) aus Tantalpentaoxyd besteht.

5. Flüssigkristall-Anzeigevorrichtung nach Anspruch 1, zusätzlich mit einer die Zeilenelektroden (3) und die dünnen Metallschichtabschnitte (11) vollständig bedeckenden isolierenden Schicht (4), auf der die Spaltenelektroden (8) ausgebildet sind.

## Revendications

1. Dispositif d'affichage à cristaux liquides comprenant un substrat isolant (1) sur lequel sont formés :
une pluralité d'électrodes de rangées et de colonnes (3, 8) ;
une pluralité de transistors à film mince aux intersections des électrodes de rangées et de colonnes dont chacun est connecté à l'électrode de rangée et à l'électrode de colonne qui se croisent à l'intersection respective ;
une pluralité d'électrodes d'éléments d'image (9) dont chacune est connectée à son transistor à film mince respectif de manière à pouvoir être adressée par ce dernier ; et
des portions (11) de film métallique mince formées dans le même plan que les électrodes de rangées (3), lesdites portions (11) de film métallique mince s'étendant le long et au dessous des électrodes de colonnes (8) entre les électrodes de rangées (3) ;
caractérisé par
un film isolant (1) formé sur le substrat isolant (1), lesdites électrodes de rangées et de colonnes, lesdits transistors à film mince, lesdites électrodes d'éléments d'image et lesdites portions de film métallique mince étant formées sur le film isolant (2) ; et
lesdites portions (11) de film métallique mince ayant une largeur qui est plus grande que celle des électrodes de colonnes (8).

2. Dispositif d'affichage à cristaux liquides selon la revendication 1, dans lequel les électrodes de rangées (3) et les portions (11) de film métallique mince sont faites de la même matière et ont la même épaisseur.

3. Dispositif d'affichage à cristaux liquides selon la revendication 2, dans lequel les électrodes de rangées (3) et les portions (11) de film métallique mince sont faites de tantale.

4. Dispositif d'affichage à cristaux liquides selon la revendication 1, dans lequel le film isolant (2) est fait de pentaoxyde de tantale.

5. Dispositif d'affichage à cristaux liquides selon la revendication 1, comprenant en outre un film isolant (4) qui recouvre entièrement lesdites électrodes de rangées (3) et lesdites portions (11) de film métallique mince, lesdites électrodes de colonnes (8) étant formées au-dessus de ce film isolant (4).
